(19) **Europäisches Patentamt**

**European Patent Office**

**Office européen des brevets**

(11) **EP 1 047 582 B1**

(12) **EUROPÄISCHE PATENTSCHRIFT**

(45) Veröffentlichungstag und Bekanntmachung des Hinweises auf die Patenterteilung:
**17.03.2004   Patentblatt 2004/12**

(21) Anmeldenummer: **98966784.5**

(22) Anmeldetag: **18.12.1998**

(51) Int Cl.⁷: **B60R 21/32**

(86) Internationale Anmeldenummer:
**PCT/DE1998/003724**

(87) Internationale Veröffentlichungsnummer:
**WO 1999/037508 (29.07.1999 Gazette 1999/30)**

(54) **SCHALTUNG ZUM ÜBERWACHEN DES ZÜNDKREISES FÜR EINE SICHERHEITSEINRICHTUNG IN EINEM KRAFTFAHRZEUG**

CIRCUIT FOR MONITORING THE IGNITION SYSTEM FOR A SAFETY DEVICE IN AN AUTOMOBILE

CIRCUIT POUR SURVEILLER LE CIRCUIT D'ALLUMAGE D'UN SYSTEME DE PROTECTION DANS UNE AUTOMOBILE

(84) Benannte Vertragsstaaten:
**DE FR GB IT SE**

(30) Priorität: **21.01.1998   DE 19802042**

(43) Veröffentlichungstag der Anmeldung:
**02.11.2000   Patentblatt 2000/44**

(73) Patentinhaber: **ROBERT BOSCH GMBH**
**70442 Stuttgart (DE)**

(72) Erfinder:
• **SCHUMACHER, Hartmut**
**D-71691 Freiberg (DE)**
• **SCHIRMER, Günter**
**D-72768 Reutlingen (DE)**
• **WERNER, Frank**
**D-72805 Lichtenstein (DE)**

(56) Entgegenhaltungen:
**EP-A- 0 338 413          EP-A- 0 577 988**
**EP-A- 0 701 928          WO-A-90/02673**

**Beschreibung**

Stand der Technik

Die vorliegende Erfindung betrifft eine Schaltung zum Überwachen des Zündkreises für eine Sicherheitseinrichtung in einem Kraftfahrzeug, wobei der Zündkreis einen ohmschen Widerstand darstellende Zündmittel besitzt, die mit einer Kapazität in Reihe geschaltet sind, und Schaltmittel zum Aufund Entladen der Kapazität und eine Meßeinrichtung vorhanden sind, welche im Zündkreis abfallende Spannungen ermittelt, um daraus den widerstand der Zündmittel und die Kapazität zu bestimmen.

Eine derartige Wechselstromzündung von Zündpillen für Airbags oder Gurtstraffer ist in der EP 0 577 988 A1 beschrieben. Damit gewährleistet ist, daß der Zündkreis einer Sicherheitseinrichtung im Falle eines Crashes fehlerfrei funktioniert, muß der Zündkreis laufend überwacht werden. Wird ein Fehler des Zündkreises festgestellt, so wird das im Fahrzeug optisch oder akkustisch signalisiert. In der Praxis können folgende Fehler am Zündkreis auftreten:
Zwischen der Zündpille und der Batteriespannung oder der Masse kann ein Kurzschluß entstehen. Außerdem können Nebenschlüsse zwischen den Zuleitungen des Zündkreises selbst oder parallel zum Zündkreiskondensator auftreten. Gemäß der aus der EP 0 577 988 A1 bekannten Überwachungsschaltung werden die am Zündkreis abfallenden Spannungen während verschiedener Ladezustände des im Zündkreis befindlichen Kondensators gemessen und aus der Größe der Spannung abgeleitet, ob die Zündpille oder der Kondensator fehlerbehaftet ist.

Aus der WO/02673 ist ebenfalls eine Wechselstromzündung bekannt, bei der ein Zündkreis, bestehend aus einem Zündmittel und einer damit in Reihe geschalteten Kapazität, über zwei Schalter an eine Versorgungsspannung schaltbar ist. Zur Überprüfung des Widerstandes des Zündmittels und der Kapazität im Zündkreis wird die Kapazität in mehreren Schaltzyklen der Schalter auf verschiedene Spannungen aufgeladen. Es wird die an einem Meßwiderstand abgreifbaren Ladespannungen erfaßt, und es wird die Entladezeitkonstante ermittelt. Aus diesen beiden Größen wird durch Vergleich mit Referenzwerten in einer Steuerschaltung abgeleitet, ob der Zündkreis fehlerbehaftet ist oder nicht.

Vorteile der Erfindung

Gemäß den Merkmalen des Patentanspruchs 1 sind die Zündmittel und die Kapazität des Zündkreises im Querzweig einer Transistor-Brückenschaltung angeordnet. An diese Transistor-Brückenschaltung ist eine Meßstromquelle angeschlossen. Ein Steuergerät steuert die Transistoren und die Meßstromquelle während eines Überwachungszyklusses so, daß die Kapazität von einem Meßstrom aufgeladen wird. Eine vom Steuergerät gesteuerte Abtast-Halte-Schaltung erfaßt nach der Aufladung der Kapazität eine erste am Zündkreis abfallende Spannung und nach Abschalten des Meßstroms eine zweite am Zündkreis abfallende Spannung, so daß das Steuergerat aus diesen beiden Spannungen den Widerstand der Zündmittel und die Kapazität ermitteln kann.

Mit dieser Schaltungsanordnung lassen sich die Meßspannungen am Zündkreis sehr schnell und exakt erfassen, so daß mit großer Zuverlässigkeit ein Fehler im Zündkreis ermittelt werden kann. Die Verwendung einer Transistor-Brucke hat den Vorteil, daß selbst bei einem einseitigen Kurzschluß der Transistor-Brücke gegen die Versorgungsspannung noch eine Zündung der Sicherheitseinrichtung möglich ist. Die Transistor-Brücke weist auch eine gleichmäßigere Temperaturbelastung der einzelnen Transistoren auf. Ein externer Widerstand des Zündkreises, wie beim Stand der Technik, entfällt bei der erfindungsgemäßen Anordnung, wodurch sich die Energieübertragung pro Zeiteinheit an die Zündpille erhöht.

Vorteilhafte weiterbildungen der Erfindung gehen aus den Unteransprüchen hervor.

So besteht die Meßstromquelle aus der Reihenschaltung eines Schalttransistors und eines Meßwiderstandes, welche einerseits an den Querzweig der Transistor-Brückenschaltung und andererseits an einem an einer Versorgungsspannung anliegenden Punkt der Transistor-Brückenschaltung angeschlossen ist. Zum Schalttransistor kann eine Diode als Verpolschutz in Reihe geschaltet werden.

Das Steuergerät steuert den Schalttransistor der Meßstromquelle und einen Schalter der Abtast-Halte-Schaltung synchron an. Am Eingang der Abtast-Halte-Schaltung befindet sich ein Operationsverstärker, dessen Ausgangsstrom über den Schalter fließt, und der vom Schalter durchgeschaltete Strom wird einem Verstärker zugeführt, der in einem Rückkopplungszweig eine Speicherkapazität enthält. Der Ausgang der Abtast-Halte-Schaltung ist auf einen Eingang des Operationsverstärkers rückgekoppelt. Der Schalter der Abtast-Halte-Schaltung kann ein Transmissionsgate-Transistor sein. Die Eingangsstufe des Verstärkers kann aus einem oder mehreren MOS-Transistoren bestehen.

Beschreibung eines Ausführungsbeispiels

Anhand eines in der Zeichnung dargestellten Ausführungsbeispiels wird nachfolgend die Erfindung näher erläutert. Es zeigen:

Figur 1 ein Schaltbild einer Überwachungsschaltung für den Zündkreis eines Sicherheitssystems und

Figur 2 einen Ladeverlauf einer Kapazität im Zündkreis.

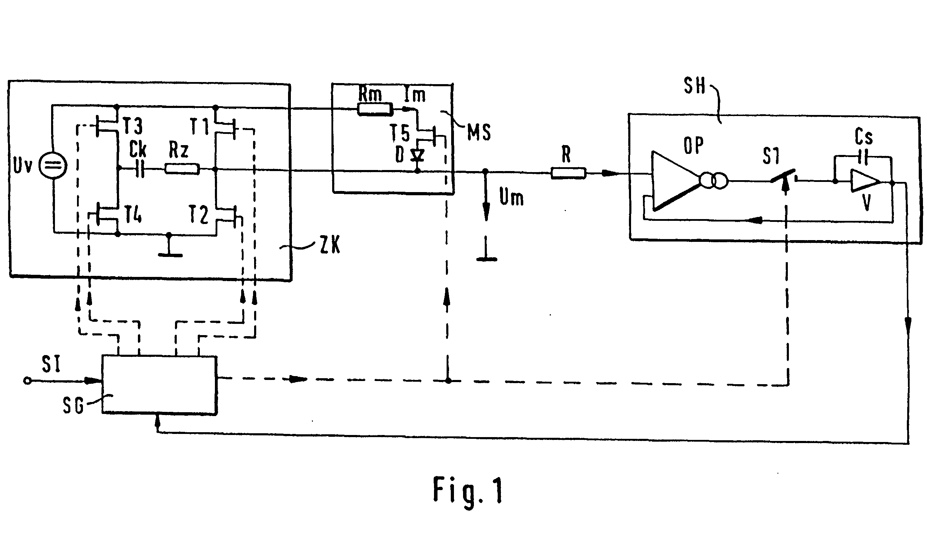

Die in Figur 1 dargestellte Zeichnung besteht im wesentlichen aus vier Funktionsgruppen, nämlich einem Zündkreis ZK, einer Meßstromquelle MS, einer Abtast-Halte-Schaltung SH und einem Steuergerät SG. Das Steuergerät SG erhält ein oder mehrere Eingangssignale SI von ein oder mehreren Beschleunigungs- oder Crashsensoren. Ergibt sich nach Auswertung der Eingangssignale SI, daß Rückhalteeinrichtungen (zum Beispiels Airbags oder Gurtstraffer) ausgelöst werden sollen, so gibt das Steuergerät ein entsprechendes Steuersignal an den Zündkreis ZK ab, der dann eine Zündung der Rückhalteeinrichtungen einleitet. Auf die an sich bekannte Auswertung der Eingangssignale SI im Steuergerät SG wird hier nicht näher eingegangen, da sie nicht Gegenstand der Erfindung ist.

Der Zündkreis besteht aus einer an einer Versorgungsspannung Uv anliegenden Transistor-Brückenschaltung. Die Transistor-Brückenschaltung hat in dem dargestellten Ausführungsbeispiel vier Transistoren (zum Beispiel Feldeffekttransistoren) T1, T2, T3 und T4. Im Querzweig der Transistor-Brückenschaltung befinden sich Zündmittel (Zündpille) mit einem ohmschen Widerstand Rz. Zu diesem Zündpillenwiderstand Rz ist eine Kapazität Ck in Reihe geschaltet. Die Transistor-Brückenschaltung bietet zwei alternative Möglichkeiten, dem Zündpillenwiderstand Rz einen Zündstrom zuzuführen. Es wird dabei zwischen Normalbetrieb und Gegentaktbetrieb unterschieden. Im Normalbetrieb, bei dem die Spannung Uv groß ist (z.B. 45V), sind abwechselnd die Transistoren T1 und T2 angesteuert, wobei der Transistor T4 dauernd angesteuert und der Transistor T3 gesperrt ist. Oder alternativ dazu sind die Transistoren T3 und T4 abwechselnd angesteuert und der Transistor T2 ist dauernd angesteuert und der Transistor T1 gesperrt. Im Gegentaktbetrieb, bei demr die Spannung Uv klein ist (z.B. Batteriespannung des Fahrzeugs), gelangt der Zündstrom aus der Spannungsquelle Uv entweder an den Zündpillenwiderstand Rz, wenn die Transistoren T3 und T2 durchgeschaltet und die Transistoren T1 und T4 ausgeschaltet oder wenn die Transistoren T1 und T4 durchgeschaltet und die Transistoren T3 und T2 ausgeschaltet sind. Es kann somit auch bei verringerter Spannung Uv genügend Energie in die Zündpille gelangen.

Indem im jeweiligen Betrieb - Normalbeterieb bzw. Gegentaktbetrieb - die Ansteuerkombinationen der Transistoren T1, T2, T3 und T4 jeweils abwechselnd erfolgen, ist auch dann ein Zündstromfluß gewährleistet, wenn ein Anschluß des Zündkreises einem Kurzschluß ausgesetzt ist.

Für die Ansteuerung der Transistoren T1, T2, T3, T4 gehen dazu vom Steuergerät SG Steuersignale an die Steuerelektroden der Transistoren T1, T2, T3 und T4 aus. Die Steuersignalleitungen sind in der Figur 1 strichliert eingezeichnet.

In einem in gewissen Zeitabständen immer wiederkehrenden Überwachungszyklus für den Zündkreis wird zunächst nur der Transistor T4 durchgeschaltet und alle anderen Transistoren T1, T2 und T3 werden ausgeschaltet. Nach Einschalten einer Meßstromquelle MS, die einerseits an die Klemme zwischen den Transistore T1 und T2 und andererseits an die Versorgungsspannung Uv der Transistor-Brückenschaltung angeschlossen ist, fließt durch die Reihenschaltung des Zündpillenwiderstandes Rz und der Kapazität Ck ein Meßstrom Im. Die Meßstromquelle MS besteht aus einem Meßwiderstand Rm und einem damit in Reihe geschalteten Schalttransistor T5. Zweckmäßigerweise ist zum Schalttransistor T5 noch eine Diode D als Verpolschutz in Reihe geschaltet, um den Schalttransistor T5 vor Beschädigung durch überhöhte Spannungen zu schützen, die beim Zünden auftreten.

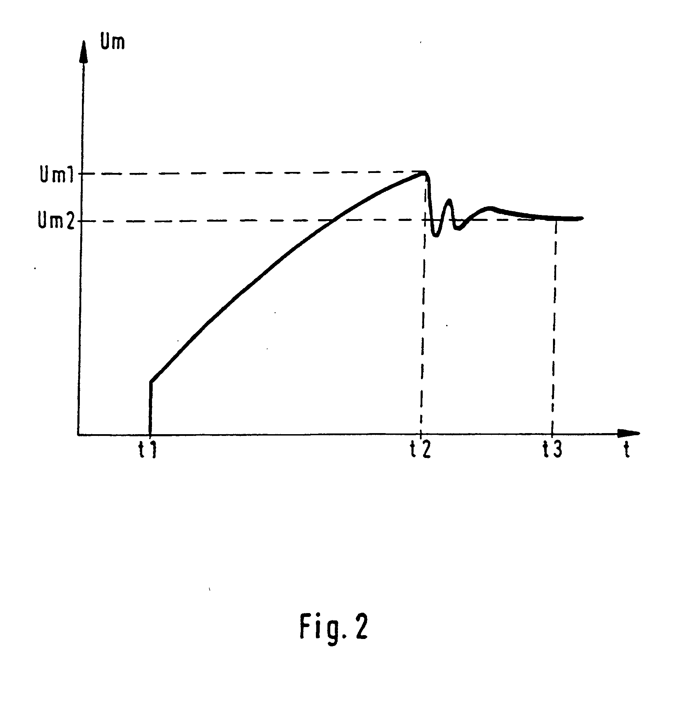

Am Ausgang der Meßstromquelle MS ist eine Meßspannung Um abgreifbar. Der Verlauf der Meßspannung Um während des Meßvorgangs ist in der Figur 2 dargestellt. Zu einem Zeitpunkt t1 wird der Schalttransistor T5, gesteuert vom Steuergerät SG, durchgeschaltet. Der daraufhin fließende Meßstrom Im fließt durch die Zündpille Rz und lädt die Kapazität Ck auf. Nach einer gewissen Aufladung der Kapazität Ck, zu einem Zeitpunkt t2, ist die Meßspannung Um auf den Wert Um1 angestiegen. Zu diesem Zeitpunkt t2 wird der Schalttransistor T5 wieder abgeschaltet. Die Meßspannung Um verringert sich um den Spannungsabfall an den ohmschen Komponenten des Zündkreises. Wie der Figur 2 zu entnehmen ist, kommt es wegen der in den Zuleitungen wirksamen Induktivitäten zu einer abklingenden Schwingung der Meßspannung Um. Erst wenn die Schwingung vollkommen abgeklungen ist, wird die Meßspannung Um2 zu einem Zeitpunkt t3 erfaßt.

Die Abtast-Halte-Schaltung SH erfaßt die zum Zeitpunkt t2 und t3 anliegenden Meßspannungen Um1, Um2 und gibt sie an das Steuergerät SG weiter. Am Eingang der Abtast-Halte-Schaltung SH befindet sich ein Operationsverstärker OP, an dessen invertierendem Eingang die Meßspannung Um über einen Widerstand R anliegt. Der Ausgangsstrom des Operationsverstärkers OP führt über einen elektrisch steuerbaren Schalter S1 zu einem mit einer Speicherkapazität Cs rückgekoppelten Verstärker V. Der Ausgang des Verstärkers ist auf den positiven Eingang des Operationsverstärkers OP rückgekoppelt. Zum Zeitpunkt t1 wird, gesteuert durch das Steuergerät SG, synchron mit dem Schalttransistor T5 auch der Schalter S1 der Abtast-Halte-Schaltung SH geschlossen. Ebenfalls synchron werden der Schalter S1 und der Schalttransistor T5 zum Zeitpunkt t2 geöffnet. Am Ausgang des Verstärkers V steht dann die Meßspannung Um1 zur Verfügung. Zur Erfassung der zweiten Meßspannung Um2 wird der Schalter S1 zum Zeitpunkt t3 nochmals betätigt.

Da der Operationsverstärker OP wie eine Stromquelle auf den Schalter S1 wirkt, kann der Schalter mit einem Transmissionsgate-Transistor (bestehend aus je einem n-Kanal und einem p-Kanal MOS-Transistor) realisiert werden. Wegen der kleinen geometrischen Abmessungen von Transmissionsgate-Transistoren entsteht beim Schaltvorgang nur eine minimale Ladungskopplung auf die Speicherkapazität Cs infolge der nur sehr geringen parasitären Transistorkapazitäten.

Da am Ausgang des Operationsverstärkers OP eine Stromspeisung vorliegt, bewirkt der hohe Innenwiderstand des Schalters S1 keine nachteilige Zeitverzögerung. Der Innenwiderstand des Schalters S1 ist hoch. da seine Transistoren zur Vermeidung parasitärer Kapazitäten sehr klein gewählt sind. Der Quellenstrom aus dem Operationsvertsärker OP wird durch den Innenwiderstand des Schalters S1 jedoch nicht spürbar reduziert.

Der Verstärker V hat in der Eingangsstufe ein oder mehrere MOS-Transistoren. Dadurch kann kein Ladungsabfluß aus der Speicherkapazität Cs erfolgen, und damit ist eine fehlerfreie Speicherung der Meßspannung möglich. Denn MOS-Eingänge benötigen zur Ansteuerung keinen statischen Strom sondern sind spannungsgesteuert. Ein Auf- bzw. Entladen der Speicherkapazität Cs infolge eines Eingangsstromes des Verstärkers V ist daher ausgeschlossen.

Aus den beiden Meßspannungen Um1 und Um2 werden auf folgender Weise vom Steuergerät SG der Widerstand der Zündpille Rz und die Kapazität Ck des Zündkreises ermittelt:

Aus der Differenz der beiden Meßspannungen Um1 und Um2, dem Meßstrom Im und dem Durchlaßwiderstand Rd des Schalttransistors T4 ergibt sich der Widerstand der Zündpille Rz:

$$Rz = \frac{Um1 - Um2}{Im} - Rd$$

Dabei ergibt sich der Meßstrom Im aus der Versorgungsspannung Uv, der Meßspannung Um und dem Meßwiderstand Rm:

$$Im = \frac{Uv - Um}{Rm}$$

Man kann davon ausgehen, daß die Durchgangswiderstände Rd der Transistoren T2 und T4 der Transistor-Brückenschaltung gleich groß sind. So läßt sich auf einfache Weise der Durchgangswiderstand Rd ermitteln, indem die Transistoren T2 und T5 durchgeschaltet werden und alle anderen Transistoren T1, T3 und T4 gesperrt bleiben. Dann ergibt sich der Durchgangswiderstand Rd aus dem Spannungsabfall Um an dem Transistor T2 und dem Meßstrom Im:

$$Rd = \frac{Um}{Im}$$

Die Kapazität Ck berechnet sich aus der Differenz der beiden Schaltzeitpunkte t2, t1, der Meßspannung Um2 und dem Meßstrom Im:

$$Ck = \frac{t2 - t1}{Um2} \, Im$$

Liegen die ermittelten Werte für den Zündpillenwiderstand Rz und für die Kapazität Ck innerhalb von vorgegebenen, in dem Steuergerät SG abgespeicherten Werten, so kann von einer fehlerfreien Funktion des Zündkreises ausgegangen werden. Bei Überschreiten bzw. Unterschreiten der vorgegebenen Grenzen kann ein unerwünschter Kurzschluß oder eine Unterbrechung der Zündkreisleitung vorliegen, was als Fehler signalisiert werden muß.

**Patentansprüche**

1. Schaltung zum Überwachen des Zündkreises für eine Sicherheitseinrichtung in einem Kraftfahrzeug, wobei der Zündkreis einen ohmschen Widerstand darstellende Zündmittel besitzt, die mit einer Kapazität in Reihe geschaltet sind, und Schaltmittel zum Auf- und Entladen der Kapazität und eine Meßeinrichtung vorhanden sind, welche im Zündkreis abfallende Spannungen ermitteln, um daraus den Widerstand der Zündmittel und die Kapazität zu bestimmen, **dadurch gekennzeichnet,**

   - **daß** die Zündmittel (Rz) und die Kapazität (Ck) im Querzweig einer Transistor-Brückenschaltung (T1, T2, T3, T4) angeordnet sind,
   - **daß** eine Meßstromquelle (MS) an die Transistorbrückenschaltung (T1, T2, T3, T4) angeschlossen ist,
   - **daß** ein Steuergerät (SG) vorgesehen ist, das die Transistoren (T1, T2, T3, T4) und die Meßstromquelle (MS) während eines Überwachungszyklusses so steuert, daß die Kapazität (Ck) zunächst von einem Meßstrom (Im) aufgeladen und anschließend wieder entladen wird,
   - und **daß** eine vom Steuergerät (SG) gesteuerte Abtast-Halte-Schaltung (SH) nach der Aufladung der Kapazität (Ck) eine erste am Zündkreis abfallende Spannung (Um1) und nach Abschalten der Meßstromquelle (MS) eine zweite am Zündkreis abfallende Spannung (Um2) erfaßt, so daß das Steuergerät (SG) aus diesen beiden Spannungen (Um1, Um2) den Widerstand (Rz) der Zündmittel und die Kapazität (Ck) ermitteln kann.

2. Schaltung nach Anspruch 1, **dadurch gekennzeichnet, daß** die Meßstromquelle (MS) aus der Reihenschaltung eines Schalttransistors (T5) und eines Meßwiderstandes (Rm) besteht, welche einerseits an den Querzweig der Transistor-Brückenschaltung (T1, T2, T3, T4) und andererseits an einem an einer Versorgungsspannung (Uv) anliegenden Punkt der Transistor-Brückenschaltung (T1, T2, T3, T4) angeschlossen ist.

3. Schaltung nach Anspruch 2, **dadurch gekennzeichnet, daß** zum Schalttransistor (T5) eine Diode (D) als Verpolschutz in Reihe geschaltet ist.

4. Schaltung nach Anspruch 1, **dadurch gekennzeichnet, daß** das Steuergerät (SG) den Schalttransistor (T5) der Meßstromquelle (MS) und einen Schalter (S1) der Abtast-Halte-Schaltung (SH) synchron ansteuert.

5. Schaltung nach Anspruch 1 oder 4, **dadurch gekennzeichnet, daß** sich am Eingang der Abtast-Halte-Schaltung (SH) ein Operationsverstärker (OP) befindet, dessen Ausgangsstrom über den Schalter (S1) fließt, und daß der vom Schalter (S1) durchgeschaltete Strom einem Verstärker (V) zugeführt ist, der in einem Rückkopplungszweig eine Speicherkapazität (Cs) enthält.

6. Schaltung nach Anspruch 5, **dadurch gekennzeichnet, daß** der Ausgang der Abtast-Halte-Schaltung (SH) auf einen Eingang des Operationsverstärkers (OP) rückgekoppelt ist.

7. Schaltung nach Anspruch 4 oder 5, **dadurch gekennzeichnet, daß** der Schalter (S1) ein Transmissionsgate-Transistor ist.

8. Schaltung nach Anspruch 5, **dadurch gekennzeichnet, daß** die Eingangsstufe des Verstärkers (V) aus einem oder mehreren MOS-Transistoren besteht.


**Claims**

1. Circuit for monitoring the ignition system for a safety device in a motor vehicle, the ignition system having ignition means which constitute an ohmic resistance and are connected in series with a capacitor, and there being switching means for charging and discharging the capacitor and a measuring device which determine voltages which drop across the ignition circuit, in order to determine the resistance of the ignition means and the capacitance from them. **characterized**

   - **in that** the ignition means (Rz) and the capacitor (Ck) are arranged in the shunt arm of a transistor bridge circuit (T1, T2, T3, T4),
   - **in that** measuring current source (MS) is connected to the transistor bridge circuit (T1, T2, T3, T4),
   - **in that** a control device (SG) is provided which controls the transistors (T1, T2, T3, T4) and the measuring current source (MS) during a monitoring cycle in such a way that the capacitor (Ck) is firstly charged by a measuring current (Im) and then discharged again,

   - and **in that**, after the charging of the capacitor (Ck), a sample-and-hold circuit (SH) which is controlled by the control device (SG) senses a first voltage (Um1) which drops across the ignition circuit, and after the measuring current source (MS) has been switched said sample-and-hold circuit (SH) senses a second voltage (Um2) which drops across the ignition circuit, with the result that the control device (SG) can determine the resistance (Rz) of the ignition means and the capacitor (Ck) from these two voltages (Uml, Um2).

2. Circuit according to Claim 1, **characterized in that** the measuring current source (MS) is composed of a series circuit comprising a switching transistor (T5) and a measuring resistor (Rm), which circuit is connected, on the one hand, to the shunt arm of the transistor bridge circuit (T1, T2, T3, T4) and, on the other hand, to a point, present at a supply voltage (Uv), of the transistor bridge circuit (T1, T2, T3, T4).

3. Circuit according to Claim 2, **characterized in that** a diode (D) is connected in series with the switching transistor (T5) as a polarity reversal protection.

4. Circuit according to Claim 1, **characterized in that** the control device (SG) synchronously actuates the switching transistor (T5) of the measuring current source (MS) and a switch (S1) of the sample-and-hold circuit (SH).

5. Circuit according to Claim 1 or 4, **characterized in that** an operations amplifier (OP) whose output current flows across the switch (S1) is located at the input of the sample-and-hold circuit (SH), and **in that** the current which is switched through by the switch (S1) is fed to an amplifier (V) which contains a storage capacitor (Cs) in a feedback branch.

6. Circuit according to Claim 5, **characterized in that** the output of the sample-and-hold circuit (SH) is fed back to an input of the operations amplifier (OP).

7. Circuit according to Claim 4 or 5, **characterized in that** the switch (S1) is a transmissions gate transistor.

8. Circuit according to Claim 5, **characterized in that** the input stage of the amplifier (V) is composed of one or more MOS transistors.

**Revendications**

1. Circuit de surveillance du circuit d'allumage d'une installation de sécurité de protection d'un véhicule automobile dans lequel le circuit d'allumage comporte un moyen d'allumage en forme de résistance ohmique avec en série une capacité et les moyens de commutation pour charger et décharger la capacité ainsi qu'une installation de mesure déterminant les tensions dans le circuit d'allumage pour en déduire la résistance du moyen d'allumage et la capacité,
   **caractérisé en ce que**

   - les moyens d'allumage (Rz) et la capacité (Ck) sont montés dans la branche transversale d'un montage en pont à transistors (T1, T2, T3, T4) ;
   - une source de courant de mesure (MS) est raccordée au montage en pont à transistors (T1, T2, T3, T4) ;
   - un appareil de commande (SG) commande les transistors (T1, T2, T3, T4) et la source de courant de mesure (Ms) pendant un cycle de surveillance de façon à charger d'abord la capacité (Ck) avec un courant de mesure (Im) puis à la décharger ; et
   - un circuit de détection et de maintien (SH) commandé par l'appareil de commande (SG) saisit après la charge de la capacité (Ck), une première tension (Um1) dans le circuit d'allumage et après la coupure de la source de courant de mesure (MS), une seconde tension (Um2) dans le circuit d'allumage de façon que l'appareil de commande (SG) puisse déterminer la résistance (Rz) du moyen d'allumage et la capacité (Ck) à partir de ces deux tensions (Um1, Um2).

2. Circuit selon la revendication 1,
   **caractérisé en ce que**
   la source de pont de mesure (MS) est formée du montage en série d'un transistor de commutation (T5) et d'une résistance de mesure (Rm) qui est reliée d'un côté à la branche transversale du montage en pont à transistors (T1, T2, T3, T4) et d'autre part à un point du montage en pont à transistors (T1, T2, T3, T4) relié à la tension d'alimentation (Uv).

3. Circuit selon la revendication 2,
   **caractérisé par**
   une diode (D) comme protection d'erreur de polarité branchée en série sur le transistor de commutation (T5).

4. Circuit selon la revendication 1,
   **caractérisé en ce que**
   l'appareil de commande (SG) commande le transistor de commutation (T5) de la source de courant de mesure (MS) et d'un commutateur (S1) du circuit de détection et de maintien (SH), ces transistors étant commandés en synchronisme.

5. Circuit selon la revendication 1 ou 4,
   **caractérisé en ce que**
   l'entrée du circuit de détection et de maintien (SH) comporte un amplificateur opérationnel (OP) dont le courant de sortie traverse le commutateur (S1) et le courant en sortie du commutateur (S1) est appliqué à un amplificateur M qui comporte une capacité de stockage (Cs) dans sa branche de réaction.

6. Circuit selon la revendication 5,
   **caractérisé en ce que**
   la sortie du circuit de détection et de maintien (SH) est couplé en retour à une entrée de l'amplificateur opérationnel (OP).

7. Circuit selon la revendication 4 ou 5,
   **caractérisé en ce que**
   le commutateur (S1) est un transistor à porte de transmission.

8. Circuit selon la revendication 5,
   **caractérisé en ce que**
   l'étage d'entrée de l'amplificateur (V) est formé d'un ou plusieurs transistors MOS.

Fig.1

EP 1 047 582 B1

Fig. 2

8